# EUROPEAN PATENT APPLICATION

(11) **EP 4 730 709 A1**
(43) Date of publication of application: **22.04.2026**
(21) Application number: 25206449.8
(22) Date of filing: 02.10.2025
(51) Int. Cl.: H04L 9/40

(54) **FRAME-TYPE DEVICE AND CONTROL BOARD THEREIN**

(30) Priority: 15.10.2024 US 202418916537
(71) Applicant: TP-Link Systems Inc., Irvine, California 92618 (US)
(72) Inventor: CHEN, Hui, Shenzhen, 518000 (CN); WEI, Gang, Shenzhen, 518000 (CN)
(74) Representative: Marks & Clerk LLP

(57) **Abstract**

This disclosure provides a frame-type device and a method for data communication therein. The frame-type device includes a control board and a service board. The control switch chip includes a first control port for connecting with a user management interface, at least one second control port for respectively connecting with the at least one service board, and a third control port for connecting with the control network card. The control switch chip is configured to communicate data between the user management interface and the control network card and communicate data between the control network card and the at least one service board. The first control port is configured to prevent data from the at least one service board from being forwarded to the user management interface in a first state.

## Description

### CROSS-REFERENCE TO RELATED APPLICATION

This Patent application claims priority of the U.S. Patent Application No. 18/916,537, filed on October 15, 2024, and titled "FRAME-TYPE DEVICE AND CONTROL BOARD THEREIN", the disclosure of which is incorporated herein by reference in its entirety as part of the present application.

### TECHNICAL FIELD

The present disclosure relates to a frame-type device and a control board, and more specifically relates to a management channel design for a frame-type device.

### BACKGROUND

A frame-type device is a common device with high scalability and high performance in the field of network communication. The frame-type device usually has a solid frame as the supporting structure, and various functional modules arranged and installed within the frame. The modules may be customized and combined according to the specific purpose of the device.

The frame-type device typically includes a control board and service boards. On one hand, the control board needs to communicate management and configuration information with a user management interface, which can be achieved by an external user management channel. On the other hand, the control boards also need to transmit management information (such as information on configuration, firmware upgrade) to the service boards and receive information of the service boards (such as an operation state, running logs) from the service boards, which can be achieved by an internal board management channel.

For security reasons, in the current frame-type device, the external user management channel is typically physically isolated from the internal board management channel. As such, the control board needs two physical network cards, one for forming the external user management channel with the user management interface, and the other one for forming the internal board management channel with the service boards. Specifically, the external user management interface allows users to log into the frame-type device for configuration and management. Further, the board management channel allows the control board communicate data or information with the service boards. For example, the control boards are provided with two separate CPU Ethernet cards, one of which is connected to the user management interface and the other one of which is connected to the service boards, respectively.

Similarly, each service board is also provided with two CPU Ethernet cards, wherein one is connected to an external download interface for development and debugging of the frame-type device, and the other one is connected to the control board for internal data communication.

### SUMMARY

In view of this, the present disclosure provides a frame-type device and a control board therein, such that the cost of the device can be reduced and the convenience for the developers and users can be increased.

In an aspect of the present disclosure, the present disclosure provides a frame-type device. The frame-type device may comprise a primary control board and at least one service board. The primary control board may comprise a primary control network card and a primary control switch chip; and at least one service board. The primary control switch chip may comprise a first primary control port for connecting with a first user management interface, at least one second primary control port for respectively connecting with the at least one service board, and a third primary control port for connecting with the primary control network card. The primary control switch chip may be configured to communicate data between the first user management interface and the primary control network card and communicate data between the primary control network card and the at least one service board. The first primary control port may be configured to prevent data from the at least one service board from being forwarded to the first user management interface in a first state.

In another aspect of the present disclosure, the present disclosure provides a control board in a frame-type device. The control board may comprise a control network card and a control switch chip. The control switch chip may comprise a first control port for connecting with a user management interface, at least one second control port for respectively connecting with at least one service board inside the frame-type device, and a third control port for connecting with the control network card. The control switch chip may be configured to communicate data between the user management interface and the control network card, and communicate data between the control network card and the at least one service board. The first control port may be configured to prevent data from the at least one service board inside the frame-type device from being forwarded to the user management interface in a first state.

### BRIEF DESCRIPTION OF DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps or elements.
FIG. 1 shows a diagram for an existing frame-type device.
FIG. 2 shows an exemplary diagram for a frame-type device according to an embodiment of the present disclosure.
FIG. 3 shows an exemplary diagram for a frame-type device including a secondary control board according to another embodiment of the present disclosure.
FIG. 4 shows an exemplary flowchart of data communication in a frame-type device in a first state according to an embodiment of the present disclosure.
FIG. 5 shows another exemplary flowchart of data communication in a frame-type device in the first state according to an embodiment of the present disclosure.
FIG. 6 shows another exemplary flowchart of data communication in a frame-type device in the first state according to an embodiment of the present disclosure.
FIG. 7 shows an exemplary flowchart of data communication in a frame-type device in a second state according to an embodiment of the present disclosure.

### DETAILED DESCRIPTION

The technical solution of the present disclosure will be clearly and completely described below in conjunction with accompanying drawings. Obviously, the described embodiments are part of embodiments of the present disclosure, but not all of them. Based on the embodiments in the present disclosure, all other embodiments obtained by ordinary skilled in the art without making any creative efforts fall within the scope of protection of the present disclosure.

In the description of the present disclosure, it should be noted that orientations or positional relationships indicated by terms such as "center", "upper", "lower", "left", "right", "vertical", "horizontal", "inside" and "outside" are based on orientations or positional relationships shown in the drawings, only for the convenience of describing the present disclosure and simplifying the description, instead of indicating or implying the indicated device or element must have a particular orientation. In addition, terms such as "first", "second" and "third" are only for descriptive purposes, whereas cannot be understood as indicating or implying relative importance. Likewise, words like "a", "an" or "the" do not represent a quantity limit, but represent an existence of at least one. Words like "include" or "comprise" mean that an element or an object in front of the said word encompasses those ones listed following the said word and their equivalents, without excluding other elements or objects. Words like "connect" or "link" are not limited to physical or mechanical connections, but can comprise electrical connections, whether direct or indirect.

In the description of the present disclosure, it should be noted that, unless otherwise explicitly specified and limited, terms such as "mount", "link" and "connect" should be understood in a broad sense. For example, such terms may refer to being fixedly connected, or detachably connected, or integrally connected; may refer to being mechanically connected, or electrically connected; may refer to being directly connected, or indirectly connected via an intermediate medium, or internally connected inside two elements. For ordinary skilled in the art, the specific meanings of the above terms in the present disclosure may be understood on a case-by-case basis.

In addition, technical features involved in different embodiments of the present disclosure described below may be combined with each other as long as no conflicts occurs therebetween.

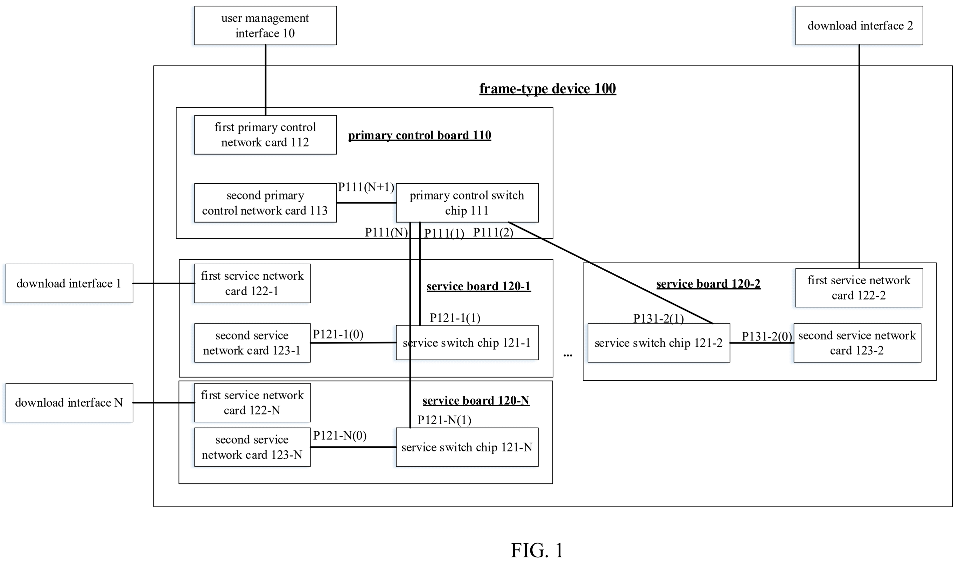

FIG. 1 shows a diagram of an existing frame-type device 100.

As shown in FIG. 1, the frame-type device 100 may comprise a primary control board 110, and a plurality of service boards 120-1, 120-2, ..., 120-N.

The primary control board 110 may comprise a primary control switch chip 111 and two primary control network cards, i.e., a first primary control network card 112 and a second primary control network card 113. For example, the two primary control network cards 112-113 may be CPU Ethernet cards. The first primary control network card 112 may be connected with a user management interface 10, which is for the user to log into the frame-type device 100 for performing configuration and management. The primary control switch chip 111 may be connected to the second primary control network card 113 and the service boards 120-1, 120-2, ..., 120-N, and configured to facilitate data communication between the primary control network cards and the plurality of service boards 120-1, 120-2, ..., 120-N. The primary control switch chip 111 may comprise at least N+1 primary control ports, where N refers to the number of the service boards. Through these primary control ports, the primary control switch chip 111 may be used to communicate data among the primary control board and the service boards. The specific connections of the N+1 ports will be described in detail with service ports as follows.

As shown in FIG. 1, there may be multiple service boards 120-1, 120-2, ..., 120-N in the frame-type device 100. Each service boards 120-1, 120-2, ... or 120-N may comprise a service switch chip 121-1, ... or 121-N and two service network cards, i.e., a first service network card 122-1, 122-2, ... or 122-N and a second service network card 123-1, 123-2, ... or 123-N, respectively. For example, the service switch cards may be CPU Ethernet cards. The first service network card 122-1, 122-2, ... or 122-N may be respectively connected with download interfaces 1-N, which may be used for downloading debugging image for developing and debugging during a development stage of the frame-type device. The second service network card 123-1, 123-2, ... or 123-N may be connected with the service switch chip service switch chip 121-1, ... or 121-N, for communicating data between the primary control board and the service boards. The service switch chips may comprise 2 ports, the specific connections of the 2 ports will be described in detail with primary control ports as follows.

Referring to FIG. 1, the connections of the ports will now be described in detail. For the N+1 ports of the primary control switch chip 111, ports P111(1), P111(2) , ..., P111(N) are respectively connected to N service boards 120-1, 120-2, ..., 120-N, and port P111(N+1) is connected to the second primary control network card 113 of the primary control board 110. Furthermore, for the 2 service ports of the service switch chip 121, the port P121-1(0), ... or P121-N(0) is respectively connected to its own second service network card 123-1, 123-2, ... or 123-N, and the port P121-1(1), ... or P121-N(1) is connected to the primary control ports P111(1), P111(2) , ..., P111(N).

In the existing management channel design shown in the FIG. 1, the external user management channel of the device is physically isolated from the internal board management channel. Specifically, every board in the frame-type device needs two physical network cards and a switch chip, wherein one network card is for forming internal board management channel such that information or data can be communicated between the primary control board and the service boards in the device, and the other one network card is for forming user external management channel such that the device can be managed or configured by users or developers.

Furthermore, the frame-type device 100 may further comprise at least one secondary control board (not shown), which can take over the operation of the primary control board 110 in case of failure of the primary control board 110.

As described above, the existing management channel design shown in the FIG. 1, every board requires two physical network cards, which results in high cost. Besides, as more network cards need to be the connected, it also results in inconvenient in operation. In view of this, the present disclosure provides an improved the frame-type device.

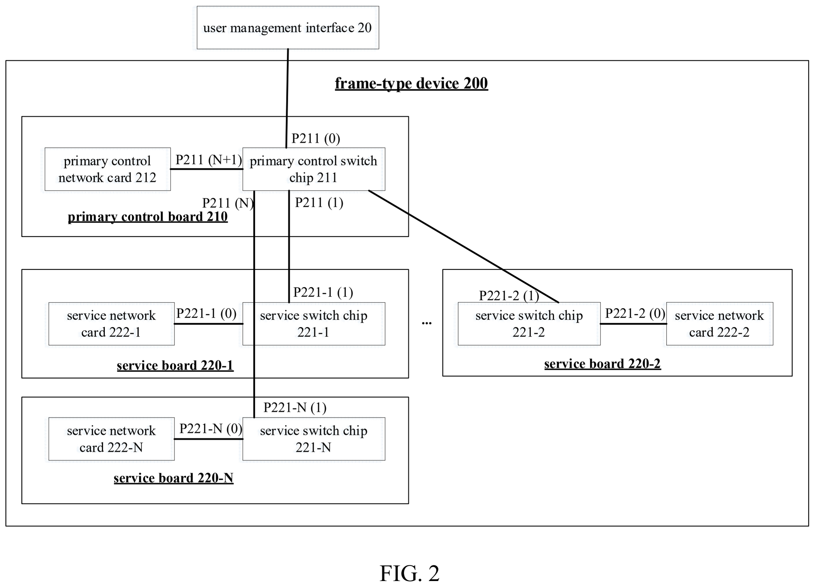

FIG. 2 shows an exemplary diagram of a frame-type device 200 according to an embodiment of the present disclosure.

The frame-type device 200 may be in different state, including a first state and a second state. The first state, for example, may be in a normal operation stage of the frame-type device. In the first state, boards in the frame-type device are power-on and in running. In addition, the second state, for example, may be in a development and debugging stage of the frame-type device. In the second state, a debugging image may be downloaded to the devices. The debugging image may include an operating system, drivers, configuration files, and related application programs, which is a snapshot of the system and can be quickly deployed onto multiple boards within the frame-type device.

As shown in FIG. 2, according to an embodiment of the present disclosure, the frame-type device 200 may comprise a primary control board 210 and at least one service board 220-1, 220-2, ..., 220-N.

The primary control board 210 may comprise a primary control switch chip 211 and a primary control network card 212. For example, the primary control network card 212 may be a CPU Ethernet card. The primary control switch chip 211 may be connected with a user management interface 20 outside the frame-type device 200 for external user management and the at least one service board 220-1, 220-2, ..., 220-N inside the frame-type device 200 for internal board communication. The primary control switch chip 211 may be configured to communicate data between the user management interface 20 and the primary control network card 212, and communicate data between the primary control network card 212 and the at least one service board 220-1, 220-2, ..., 220-N.

The primary control switch chip 211 may comprise at least N+2 primary control ports P211(0), ..., P211(N), P211(N+1), where N refers to the number of the service boards. The primary control ports may include a first primary control port P211(0) for connecting with the user management interface 20, which is used to communicate data between the primary control board 210 and the user management interface 20. The primary control ports may further include at least one second primary control port P211(1), ..., P211(N) for respectively connecting with the at least one service board 220-1, 220-2, ..., 220-N, and a third primary control port P211(N+1) for connecting with the primary control network card 212. Through these primary control ports, the primary control switch chip 211 may be configured to communicate data between the user management interface 20 and the primary control network card 212 and communicate data between the primary control board 210 and the at least one service board 220-1, 220-2, ..., 220-N. The specific connections of the N+2 primary control ports will be described in detail with service ports of the service boards as follows.

The first primary control port P211(0) may be configured to prevent data from the at least one service board 220-1, 220-2, ..., 220-N from being forwarded to the user management interface 20 in the first state. By this configuration, the data from the service boards 220-1, 220-2, ..., 220-N would not be divulged from the primary control switch chip 211, thereby achieving an isolation effect as similar to the existing device (such as the frame-type device 100 shown in FIG.1) with two separated network cards.

As described above, in the existing frame-type device (for example, the frame-type device 100 in the FIG. 1), there is another separate physical network card to communicate data between the primary control board and the external management interface. Instead of setting two separate physical network cards respectively for the external management channel and the internal board channel, by the above configuration of the primary control switch chip, the frame-type device 200 according to the embodiment can achieve communication with the external management interface and the boards inside the frame-type device by one control network card in the primary control network card, while ensuring communication security.

In an exemplary embodiment, the first primary control port P211(0) may be configured by an access control list (ACL) to prevent data from the at least one service board 220-1, 220-2, ..., 220-N from being forwarded to the user management interface 20 in the first state. The ACL is a technique for port configuration, including permitting or rejecting incoming and/or outgoing data. In this example, the port P211(0) may be set to reject the outgoing data traffic coming from the at least one service board. For example, the outgoing data may be data carried in private protocol packets.

In an exemplary embodiment, the primary control board 210 may be configured by a forward list to communicate data between the user management interface 20 and the primary control network card 212 and communicate data between the primary control network card 212 and the at least one service board 220-1, 220-2, ..., 220-N.

In an exemplary embodiment, as shown in FIG. 2, there may be multiple service boards 220-1, 220-2, ..., 220-N in the frame-type device 200. In this case, the primary control board 210 may be further configured not to communicate data between any two service boards of the plurality of service boards.

In an exemplary embodiment, each service board 220-1, 220-2, ...or 220-N may comprise a service switch chip 221-1, 221-2, ... or 221-N and a service network card 222-1, 222-2, ... or 222-N, respectively. For example, the service network cards 222-1, ..., 222-N may be CPU Ethernet cards. The service switch chip 221-1, 221-2, ... or 221-N may be connected with its own service network card 222-1, 222-2, ... or 222-N and the primary control board 210. The service switch chip 221-1, 221-2, ... or 221-N may be configured to communicate data between the primary control board 210 and the service boards 220-1, 220-2, ..., 220-N. Further, the service switch chip 221-1, 221-2, ... or 221-N may comprise 2 service ports, including first service ports P221-1(0), ..., P221-N(0) respectively connected to service network card 222-1, 222-2, ..., 222-N, and second service ports P221-1(1), P221-1(2), ..., P221-N(1) connected to the primary control switch chip 211.

In an exemplary embodiment, when the frame-type device 200 is in the first state, the primary control switch chip 211 may be configured not to communicate data between the user management interface 20 and the service boards 220-1, ..., 220-N, thereby further improving the communication security and reducing unnecessary traffic.

In an exemplary embodiment, when the frame-type device 200 is in the second state, the primary control switch chip 211 may be configured to communicate data between the user management interface 20 and the service boards 220-1, ..., 220-N, thereby achieving the debugging image download.

Referring to FIG. 2, the connections of the ports will now be described in detail. For the N+2 primary control ports of the primary control switch chip 211, the first primary control port P211(0)) is connected to the user management interface 20, the second primary control ports P211(1), P211(2), ..., P211(N) are respectively connected to the service switch chip 221-1, ..., 221-N, and the third primary control port P211(N+1) is connected to the primary control network card 212. Furthermore, for the 2 service ports of the service switch chip 221-1, ..., 221-N, the first service ports P221-1(0), ..., P221-N(0) are respectively connected to its own service network card 222-1, 222-2, ... or 222-N, and the second service ports P221-1(1), ..., P221-N(1) are connected to the primary control switch chip 211.

Table 1 shows an exemplary port forward list of the primary control switch chip in the first state.

**Table 1 An exemplary port forward list in the first state**

| Control ports receiving information | Control ports forwarding information |
|---|---|
| P211(0) | P211(N+1) |
| P211(1)-P211(N) | P211(N+1) |

As an example, the primary control ports P211(0)-P211(N+1) may be configured by a port forward list as shown in Table 1, such that the data or traffic can be only forwarded to specific ports.

Referring to above Table 1, the primary control port P211(0) may be configured with a forward relationship P211(0) → {P211(N+1)}, such that the data or traffic from the external user management interface 20 via the port P211(0) is only forwarded to the primary control network card 212, rather than any service boards. That is, the primary control switch chip 211 is configured not to communicate data between the user management interface 20 and the service boards, thereby further improving the communication security and reducing unnecessary traffic.

Furthermore, the primary control ports P211(1)-P211(N) may be configured with a forward relationship P211(1)-P211(N) → {P211(N+1)}, such that any data or traffic from any service board is only forwarded to the primary control network card. That is, the primary control switch chip 211 is configured not to communicate data between any two service boards in the plurality of service boards, thereby preventing an internal broadcast storm and/or loop and thus improving the internal communication efficiency.

Table 2 shows an exemplary port forward list of the primary control switch chip in the second state.

**Table 2 An exemplary port forward list of the primary control switch chip in the second state**

| Control ports receiving information | Control ports forwarding information |
|---|---|
| P211(0) | P211(1), ..., P211(N) |

As described above, unlike the service board in the existing frame-type device 100, the service boards in the frame-type device 200 according to the exemplary embodiment do not have a separated service network card to download the debugging image. In this case, the primary control ports may be configured to be connected with the service boards as shown in above Table 2, thereby achieving the debugging image download in the second state without setting another separated service network card.

Referring to above Table 2, the primary control port P211 (0) may be configured with a forward relationship P211 (0) → {P211 (1), ..., P211(N)}, such that the data or traffic from the user management interface 20 can be forwarded to the respective service board. Accordingly, the debugging image can be downloaded from the user management interface 20 to the service board to be developed and/or debugged. As such, each service board does not need another network card for downloading the debugging image, thereby requiring less physical network cards and thus reducing the cost and convenience of development and maintenance.

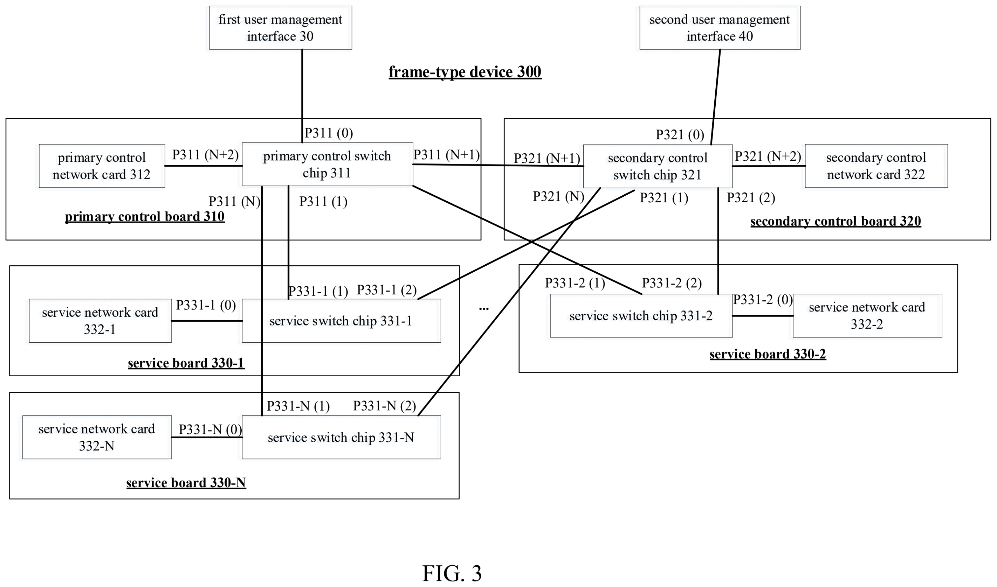

FIG. 3 shows an exemplary diagram for a frame-type device 300 according to another embodiment of the present disclosure.

As shown in FIG. 3, according to an embodiment of the present disclosure, the frame-type device 300 may comprise a primary control board 310, a secondary control board 320 and N service boards 330-1, ..., 330-N. The secondary control board 320 may take over the operation of the primary control board 310 in case of a failure on the primary control board 310.

The primary control board 310 may comprise a primary control switch chip 311 and a primary control network card 312. For example, the primary control network card 312 may be a CPU Ethernet card. The primary control switch chip 311 may be connected with a first user management interface 30 outside the frame-type device 300 for external user management and the N service boards 330-1, ..., 330-N inside the frame-type device 300 for internal board communication. The primary control switch chip 311 may be configured to communicate data between the first user management interface 30 and the primary control network card 312, and communicate data between the primary control network card 312 and the N service boards 330-1, ..., 330-N.

According to this embodiment, the primary control switch chip 311 may comprise at least N+3 primary control ports P311(0), P311(1), ..., P311(N), P311(N+1), P311(N+2), where N refers to the number of the service boards. The primary control ports may include a first primary control port P311(0) for connecting with the first user management interface 30, N second primary control ports P311(1), ..., P311(N) for respectively connecting with the N service boards 330-1, ..., 330-N, and a third primary control port P311(N+2) for connecting with the primary control network card 312. Moreover, the primary control ports may further include a fourth primary control port P311(N+1) for connecting with the secondary control board 320. Through these primary control ports, the primary control switch chip 311 may be configured to communicate data between the first user management interface 30 and the primary control network card 312 and communicate data among the primary control board 310 and N service boards 330-1, ..., 330-N. The specific connections of the primary N+3 primary control ports will be described in detail with ports of other boards as follows. Similarly, the secondary control board 320 may comprise a secondary control switch chip 321 and a secondary control network card 322. For example, the secondary control network card 322 may be a CPU Ethernet card. The secondary control switch chip 321 may be connected with a second user management interface 40 outside the frame-type device 300 for external user management and the N service boards 330-1, ..., 330-N inside the frame-type device 300 for internal board communication. The secondary control switch chip 321 may be configured to communicate data between the second user management interface 40 and the secondary control network card 322, and communicate data between the secondary control network card 322 and the N service boards 330-1, ..., 330-N. It shall be noted, the first user management interface 30 and the second user management interface 40 may refer to a same management interface or two different management interfaces, which depends on the actual application.

According to this embodiment, the secondary control switch chip 321 may comprise at least N+3 secondary control ports P321(1), ..., P321(N), P321(N+1), P321(N+2). The secondary control ports may include a first secondary control port P321(0) for connecting with the second user management interface 40, N second secondary control ports P321(1), ..., P321(N) for respectively connecting with the N service boards 330-1, ..., 330-N, and a third secondary control port P321(N+2) for connecting with the secondary control network card 322. Moreover, the secondary control ports may further include a fourth secondary control port P321(N+1) for connecting with the primary control board 310. Through these secondary control ports, the secondary control switch chip 321 may be configured to communicate data between the second user management interface 40 and the secondary control network card 322 and communicate data between the secondary control board 320 and N service boards 330-1, ..., 330-N. The specific connections of the N+3 secondary control ports will be described in detail with ports of other boards as follows.

The first primary control port P311(0) and the first secondary control port P321(0) are configured to prevent data from the service boards 330-1, ..., 330-N from being forwarded to the first user management interface 30 and the second user management interface 40 in the first state. By this configuration, the data from the service boards 330-1, ..., 330-N would not be divulged from the primary control switch chip 311 or the secondary control switch chip 321, thereby achieving an isolation effect as similar to the existing device with two separated network cards.

As described above, in the existing frame-type device (for example, the frame-type device 100 in the FIG. 1), there is another separate physical network card to communicate data between the primary control board and the external management interface. Instead of setting two separate physical network cards respectively for the external management channel and the internal board channel, by the above configuration of the primary and secondary control switch chips, the frame-type device 200 according to the embodiment can achieve communication with the external management interface and the boards inside the frame-type device by one control network card in the primary control network card, while ensuring communication security.

In an exemplary embodiment, the first primary control port P311(0) and the first secondary control port P321(0) may be configured by the ACL, which prevents the data from the service boards inside the frame-type device from being sent out to the first user management interface 30 via the primary control switch chip 311 or to the second user management interface 40 via secondary control switch chip 321.

In an exemplary embodiment, the primary control switch chip 311 may be configured by a forward list to communicate data between the first user management interface 30 and the primary control network card 312, and communicate data between the primary control network card 312 and the service boards 330-1, ..., 330-N. Similarly, the secondary control switch chip 321 may be configured by a forward list to communicate data between the second user management interface 40 and the secondary control network card 322 and communicate data between the secondary control network card 322 and the service boards 330-1, ..., 330-N .

In an exemplary embodiment, as shown in FIG. 2, there may be multiple service boards 220-1, 220-2, ..., 220-N in the device 200. In this case, the primary control board 310 and the secondary control board 320 may be further configured not to communicate data between any two service boards of the N service boards 330-1, ..., 330-N.

In an exemplary embodiment, each service board 330-1, ..., 330-N may respectively comprise a service switch chip 331-1, ..., 331-N and a service network card 332-1, ..., 332-N. For example, the service network cards may be CPU Ethernet cards. The service switch chip 331-1, ..., 331-N may be connected with its own service network card 332-1, ..., 332-N, and connected with the primary control switch chip 311 and the secondary control switch chip 321. The service switch chip 331-1, ..., 331-N may be configured to communicate data between the primary and secondary control boards and the service boards. Further, the service switch chips 331-1, ..., 331-N may comprise 3 service ports, including first service ports P331-1(0), ..., P331-N(0) respectively connected to the service network card 332-1, ..., 332-N, and second service ports P331-1(1), ..., P331-N(1) connected to the primary control switch chip 311, and third service ports P331-1(1), ..., P331-N(1) connected to the secondary control switch chip 321. The specific connections of the N+3 ports will be described in detail with ports of other boards as following.

In an exemplary embodiment, when the frame-type device 300 is in the first state, the primary/secondary control switch chip 311/321 and the service switch chips 331-1, ..., 331-N may be configured not to communicate data between the first/second user management interface 30/40 and the service boards 330-1, ..., 330-N, thereby further improving the communication security and reducing unnecessary traffic.

In an exemplary embodiment, when the frame-type device 300 is in the second state, the primary/secondary control switch chip 311/321 and the service switch chips 331-1, ..., 331-N may be configured to communicate data between the first/second user management interface 30/40 and the service boards 330-1, ..., 330-N, thereby achieving the debugging image download.

Referring to FIG. 3, the connections of the ports in the switch chips will be described in detail as below. For the N+3 primary control ports of the primary control switch chip 311, the first primary control port P311(0) is connected with the first user management interface 30, the second primary control ports P311(1), ..., P311(N) are respectively connected to the service switch chips 331-1, ..., 331-N, and the third primary control port P311(N+2) is connected to the primary control network card 312 of itself, and the fourth primary control port P311(N+1) is connected to the secondary control board 320.

Similarly, for the N+3 secondary control ports of the secondary control switch chip 321, the first secondary control port P321(0) is connected with the second user management interface 40, the second secondary control ports P321(1), P321(2), ..., P321(N) are respectively connected to N service boards 330-1, ..., 330-N, and the third secondary control port P321(N+2) is connected to the secondary control network card 322 of itself, and the fourth secondary control port P321(N+1) is connected to the primary control board 310.

Furthermore, for the 3 service ports of the service switch chip 331, the first service ports P331-1(0) , ..., P331-N(0) are respectively connected to its own service network card 332-1, ..., 332-N, and the second service ports P331-1(1), ..., P331-N(1) are connected to the primary control switch chip 311, and the third service ports P331-1(2), ..., P331-N(2) are connected to the secondary control switch chip 321.

It should be noted that, the boards and ports and their numbers in the above embodiment are described merely for instruction, not for any limitation. As an example, the frame-type device may comprise merely the primary control board without any secondary control boards. As another example, the frame-type device may comprise multiple secondary control boards. That is, the number of the secondary control boards can be changed according to various application scenarios. Accordingly, the number of ports of the control switch shall be adapted to the number of the secondary control boards. For example, as shown in FIG. 2, the number of ports of the control switch may be N+2 when there is no secondary control board, since the port for connecting the primary and secondary control boards is not required. For example, as shown in FIG. 3, the number of ports of the control switch may be N+3 when the number of the secondary control board is 1. For yet another example, if there are 2 secondary controls boards (no shown), the number of ports of the control switch may be N+4. Further, the connections of remaining ports may be configured similarly as above, and thus will not be described in detail here for brief.

Table 3 shows an exemplary port forward list of the primary and secondary control switch chips in the first state.

**Table 3 an exemplary port forward list of the primary and secondary control switch chips in the first state**

| Control ports receiving information | Control ports forwarding information |
|---|---|
| P311(0) | P311(N+1), P311(N+2) |
| P311(1)-P311(N) | P311(N+2) |
| P311(N+1) | P311(0), P311(N+2) |
| P321(0) | P321(N+1), P321(N+2) |
| P321(1)-P321(N) | P321(N+2) |
| P321(N+1) | P321(0), P321(N+2) |

As an example, the primary and secondary control ports may be configured by a port forward list as shown in following Table 3, such that data or traffic can be only forwarded to specific boards or ports.

Referring to above Table 3, the first primary control port P311(0) and the first secondary control port P321(0) may be respectively configured with a forward relationship P311(0) → {P311(N+1), P311(N+2)} and P321(0) → {P321(N+1), P321(N+2)}, such that the information or traffic from the first user management interface 30 or the second user management interface 40 is only forwarded to the primary control switch chip 311 and the secondary control switch chip 321, rather than any service boards. That is, the primary control switch chip 311 and the secondary control switch chip 321 are configured not to communicate data between the management interfaces and the service boards, thereby further improving the communication security and reducing unnecessary traffic.

Furthermore, the second primary control ports P311(1)-P311(N) and the second secondary control ports P321(1)-P321(N) may be respectively configured with a forward relationship P311(1)-P311(N) → {P311(N+2)} and P321(1)-P321(N) → {P321(N+2)}, such that any information or traffic from any service board is only forwarded to the respective control network card, thereby preventing an internal broadcast storm and/or loop and thus improving the internal communication efficiency.

In addition, the fourth primary control port P311(N+1) may be configured with a forward relationship P311(N+1) → {P311(0), P311(N+2)}, such that any information or traffic from the secondary control board is only forwarded to the first user management interface 30 and the primary control network card. Similarly, the fourth secondary control ports P321(N+1) may be configured with a forward relationship P321(N+1) → {P321(0), P321(N+2)}, such that any information or traffic from the primary control board is only forwarded to the second user management interface 40 and the secondary control network card. That is, the primary control switch chip 311 and the secondary control switch chip 321 are configured not to communicate data from the other control board to the service boards.

Table 4 shows an exemplary diagram of an exemplary port forward list of the primary and the secondary control switch chips in the second state.

**Table 4 an exemplary port forward list of the primary and secondary control switch chips in the second state**

| Control ports receiving information | Control ports forwarding information |
|---|---|
| P311(0) | P311(1), ..., P311(N) |
| P321(0) | P321(1), ..., P321(N) |

As described above, unlike the service board in the existing frame-type device 100, the service boards in the frame-type device 300 according to the exemplary embodiment do not have another separated service network card to download debugging image for device development and debugging. In this case, the primary and secondary control ports may be configured to be communicatively connected with the service boards as shown in below Table 4, thereby achieving debugging image download in the second state without setting another separated service network card.

Referring to above Table 4, the first primary control port P311 (0) may be configured with a forward relationship P311 (0) → {P311 (1), ..., P311(N)}, such that the data or traffic from the first user management interface 30 can be forwarded to the respective service board. Similarly, the first secondary control port P321 (0) may be configured with a forward relationship P321 (0) → {P321 (1), ..., P321(N)}, such that the data or traffic from the secondary management interface can be forwarded to the respective service board. Accordingly, the debugging image can be downloaded from the first and second user management interfaces 30 or 40 to the service board to be debugged. As such, each service board does not need another network card for downloading the debugging image, thereby requiring less physical network cards and thus reducing development and maintenance cost.

In another aspect, the present disclosure further provides a control board in a frame-type device. According to an embodiment of the present disclosure, referring to Figs. 2-3, the control board (for example, the primary control board 210 in FIG. 2 or 310 in FIG. 3) may comprise a control network card and a control switch chip. The control switch chip comprises a first control port for connecting with a user management interface, at least one second control port for respectively connecting with at least one service board inside the frame-type device, and a third control port for connecting with the control network card. The control switch chip is configured to communicate data between the user management interface and the control network card, and to communicate data between the control network card and the at least one service board. The first control port is configured to prevent data from the at least one service board from being forwarded to the user management interface in the first state. The detail of the control board would refer to the primary control board 210 or 310 shown in Figs 2-3.

In an exemplary embodiment, the first control port is configured by an access control list ACL to prevent data from the at least one service board from being forwarded to the user management interface. The detail of ACL has been described above in reference with Figs 2-3, which is omitted here for brief.

In an exemplary embodiment, the control switch chip is configured by a forward list to communicate data between the user management interface and the control network card, and communicate data between the control network card and the at least one service board. The forward lists in the first state have been as shown in above Table 1 or 3, through this, the information or traffic can be only forwarded to specific boards or ports. Further, in the second state, the control ports may be configured to be communicatively connected with service boards as shown in below Table 2 or 4, such that the required debugging image can be forwarded from the management interface to the respective service board, thereby transferring the debugging image for development and debugging.

In an exemplary embodiment, when there are a plurality of service boards, the control switch chip is configured not to communicate data between any two service boards of the plurality of service boards.

In an exemplary embodiment, referring to FIG. 3, there may be an additional control board (for example, the secondary control board 320 in FIG. 3), the control switch chip may further comprise at least one fourth control port for connecting with the additional control board. The control switch chip may be further configured to communicate data between the control board and the additional control board. In an exemplary embodiment, the control switch chip may be configured not to communicate data between the user management interface and the at least one service board in the first state.

In an exemplary embodiment, the control switch chip may be configured to communicate data between the user management interface and the at least one service board in the second state.

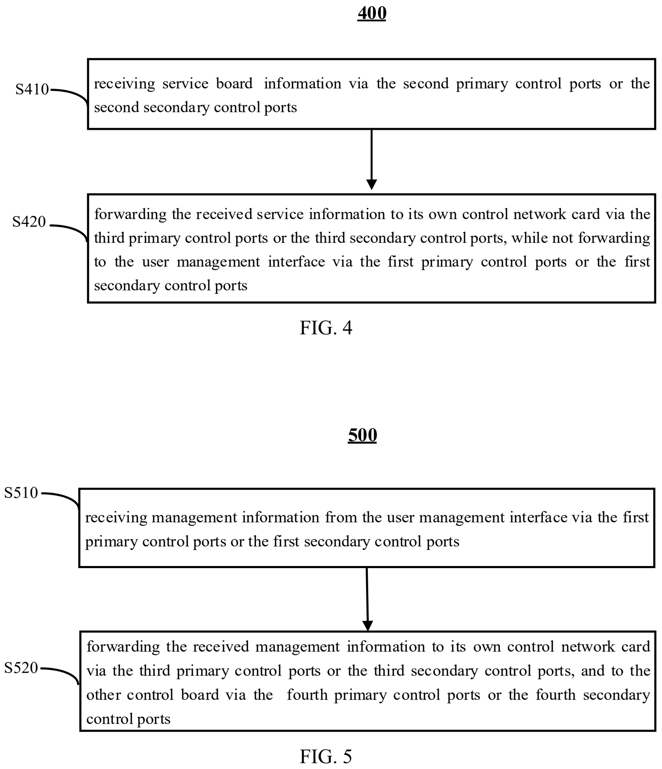

Figs. 4-6 show exemplary flowcharts of data communication in the frame-type device 300 as shown in FIG. 3 in the first state according to an embodiment of the present disclosure. The first state for example may refer to a normal operation stage of the frame-type device.

The exemplary flowchart 400 of data communication in a frame-type device will be described with reference to the frame-type device 300 as shown in FIG. 3.

According to an embodiment of the present disclosure, in order to ensure communication security, the first primary or secondary control port (i.e., P311(0) or P321(0)) may be configured to prevent data from the at least one service board from being forwarded to the user management interface.

Referring to an exemplary flowchart 400 shown in FIG. 4, at Step 410, the primary control board 310 or the secondary control board 320 receives service board information from the service board via the second primary control ports (i.e., P311(1), ..., P311(N)) or the second secondary control ports (i.e., P321(1), ..., P321(N)). The service information for example may include history record or operation state of the service boards, and so on.

At Step 420, the primary control board 310 or the secondary control board 320 forwards the received service information to its own control network card via the third primary control port P311(N+2) or the third secondary control port P321(N+2), while not forwarding the received service information to the user management interface via the first primary control port P311(0) or the first secondary control port P321(0), thereby ensuring the data security inside the frame-type device 300.

According to the embodiment , for preventing internal broadcast storm and loop, the primary control switch chip or the secondary control switch chip may be configurated not to forward management information from management interface or another control board to the service boards.

Referring to an exemplary flowchart 500 shown in FIG. 5, at Step 510, the primary control board 310 or the secondary control board 320 receives management information from the first user management interface 30 or the second user management interface 40 via the first primary or secondary control port P311(0) or P321(0). The management information for example may be information on how to configurate or manage the service boards in the frame-type device 300.

At Step 520, the primary control board 310 or the secondary control board 320 forwards the received management information to its own control network card via the third primary or secondary control port P311(N+2) or P321(N+2), and/or to the other control board via the fourth primary or secondary control port P311(N+1) or P321(N+1). However, the received management information is not transmitted to the service board via the second primary or secondary control ports P311(1) - P311(N) or P321(1) - P321(N), thereby preventing internal broadcast storm and loop and thus improving the efficiency of communication channel.

According to the embodiment, for preventing internal broadcast storm and loop, the primary control switch chip or the secondary control switch chip may be further configurated not to forward service board information from a service board to another service boards.

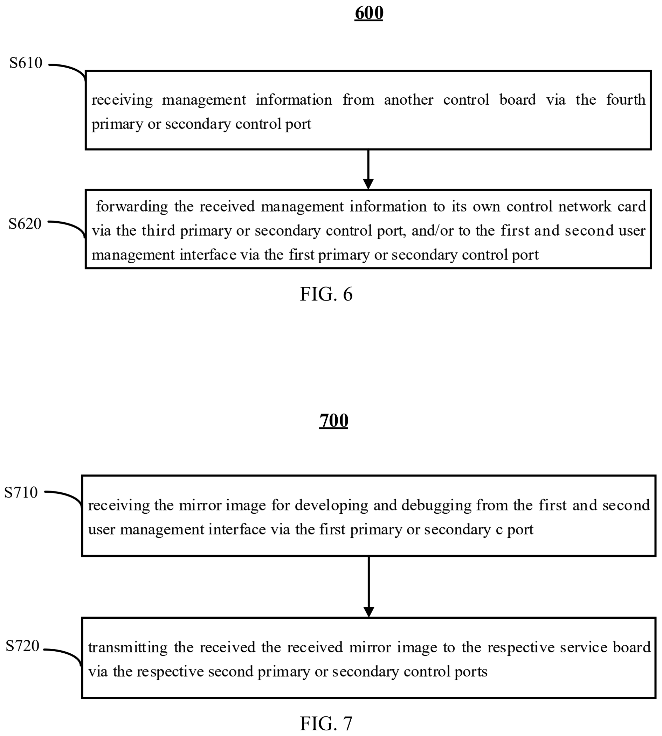

Referring to an exemplary flowchart 600 shown in FIG. 6, at Step 610, the primary or secondary control board receives information from another control board via the fourth primary or secondary control port P311(N+1) or P321(N+1).

At Step 620, the primary or secondary control board forwards the received management information to its own control network card via the third primary or secondary control port P311(N+2) or P321(N+2), or to the first user management interface 30 or the second user management interface 40 via the first primary or secondary control port P311(0) or P321(0).

FIG. 7 shows an exemplary flowchart 700 of data communication in the frame-type device 300 as shown in FIG. 3 in the second state according to an embodiment of the present disclosure.

The second state for example may refer to a development and debugging stage. In the first state, boards in the frame-type device are power-on and in running. In addition, the second state, for example, may be the development and debugging stage of the frame-type device. In the second state, a debugging image that is a collection for developing and debugging the boards is required. The debugging image includes an operating system, drivers, configuration files, and related application programs. The debugging image is similar to a snapshot of a system and can be quickly deployed onto multiple boards within the frame-type device. The debugging image or update patches can be downloaded through a network connection, and then be used to perform online installation and updates on the board.

According to another embodiment of the present disclosure, in the second state, the primary control switch chip or the secondary control switch chip and the service switch chips may be configurated to communicate information between the management interface and the service boards, such that the image files or update patches can be downloaded from the management interface.

Referring to an exemplary flowchart 700 shown in FIG. 7, at Step 710, the primary control board 310 or the secondary control board 320 receives the debugging image for developing and debugging from the first user management interface 30 or the second user management interface 40 via the first primary or secondary control port P311(0) or P321(0).

At Step 720, the primary or secondary control board transmits the received debugging image to respective service board via the respective second primary or secondary control ports P311(1)-P311(N) or P321(1)-P321(N), in order to perform development and debugging.

The present disclosure may be a system, a method, and/or a computer program product at any possible technical detail level of integration. The computer program product can comprise a computer readable storage medium (or media) having computer readable program instructions thereon for causing a processor to carry out aspects of the present disclosure. Above port configuration according to the present disclosure may be implemented in hardware, software and the combination thereof.

Expression such as "according to", "based on", "dependent on", and so on as used in the disclosure does not mean "according only to", "based only on", or "dependent only on", unless it is explicitly otherwise stated. In other words, such expression generally means "according at least to", "based at least on", or "dependent at least on" in the disclosure.

Any reference in the disclosure to an element using the designation "first", "second" and so forth is not intended to comprehensively limit the number or order of such elements. These expressions can be used in the disclosure as a convenient method for distinguishing two or more units. Thus, a reference to a first unit and a second unit does not imply that only two units can be employed or that the first unit must precede the second unit in some form.

The terms such as "connected", "coupled" or any of their variants used in the disclosure refer to any connection or combination, direct or indirect, between two or more units, which can include the following situations: between two units that are "connected" or "coupled" with each other, there are one or more intermediate units. The coupling or connection between the units can be physical or logical, or can also be a combination of the two. As used in the disclosure, two units can be considered to be electrically connected through the use of one or more wires, cables, and/or printed, and as a number of non-limiting and non-exhaustive examples, and are "connected" or "coupled" with each other through the use of electromagnetic energy with wavelengths in a radio frequency region, the microwave region, and/or in the light (both visible and invisible) region, and so forth.

When used in the disclosure or the claims "including", "comprising", and variations thereof, these terms are as open-ended as the term "having". Further, the term "or" used in the disclosure or in the claims is not an exclusive-or.

The present disclosure has been described in detail above, but it is obvious to those skilled in the art that the present disclosure is not limited to the embodiments described in the disclosure. The present disclosure can be implemented as a modified and changed form without departing from the spirit and scope of the present disclosure defined by the description of the claims. Therefore, the description in the disclosure is for illustration and does not have any limiting meaning to the present disclosure.

## Claims

1. A frame-type device, comprising:
a primary control board comprising a primary control network card and a primary control switch chip; and
at least one service board,
wherein the primary control switch chip comprises a first primary control port for connecting with a first user management interface, at least one second primary control port for respectively connecting with the at least one service board, and a third primary control port for connecting with the primary control network card,
the primary control switch chip is configured to communicate data between the first user management interface and the primary control network card and communicate data between the primary control network card and the at least one service board, and
the first primary control port is configured to prevent data from the at least one service board from being forwarded to the first user management interface in a first state.

2. The frame-type device according to claim 1, wherein
the first primary control port is configured by an access control list (ACL) to prevent data from the at least one service board from being forwarded to the first user management interface in the first state.

3. The frame-type device according to claim 1, wherein
the primary control switch chip is configured by a forward list to communicate data between the first user management interface and the primary control network card and communicate data between the primary control network card and the at least one service board.

4. The frame-type device according to claim 1, wherein
the at least one service board comprises a plurality of service boards, and
the primary control switch chip is configured not to communicate data between any two
service boards of the plurality of service boards.

5. The frame-type device according to claim 1, wherein
each of the at least one service board comprises a service network card and a service switch chip,
the service switch chip comprises a first service port for connecting with the service network card, and a second service port for connecting with the primary control board, and
the service switch chip is configured to communicate data between the primary control board and the service network card.

6. The frame-type device according to claim 1, wherein
the primary control switch chip is configured not to communicate data between the first user management interface and the at least one service board in the first state.

7. The frame-type device according to claim 1, wherein
the primary control switch chip is configured to communicate data between the first user management interface and the at least one service board in a second state.

8. The frame-type device according to claim 1, further comprising:
a secondary control board comprising a secondary control network card and a secondary control switch chip, and
wherein the secondary control switch chip comprises a first secondary control port for connecting with a second user management interface, at least one second secondary control port for respectively connecting with the at least one service board, a third secondary control port for connecting with the secondary control network card, and a fourth secondary control port for connecting with the primary control board,
each of the at least one service board comprises a service network card and a service switch chip,
the service switch chip comprises a first service port for connecting with the service network card, a second service port for connecting with the primary control board, and a third service port for connecting with the secondary control board, and
the secondary control switch chip is configured to communicate data between the secondary control network card and the at least one service board in response to failure of the primary control switch chip.

9. The frame-type device according to claim 8, wherein
the first secondary control port is configured by an access control list (ACL) to prevent data from the at least one service board from being forwarded to the second user management interface.

10. The frame-type device according to claim 8, wherein
the secondary control switch chip is configured by a forward list to communicate data between the second user management interface and the secondary control network card and communicate data between the secondary control network card and the at least one service board.

11. The frame-type device according to claim 8, wherein
the at least one service board comprises a plurality of service boards, and
the secondary control switch chip is configured not to communicate data between any two service boards of the plurality of service boards.

12. The frame-type device according to claim 8, wherein
the secondary control switch chip is configured not to communicate data between the second user management interface and the at least one service board in the first state.

13. The frame-type device according to claim 8, wherein
the secondary control switch chip is configured to communicate data between the second user management interface and the at least one service board in a second state.

14. A control board in a frame-type device, comprising:
a control network card; and
a control switch chip,
wherein the control switch chip comprises a first control port for connecting with a user management interface, at least one second control port for respectively connecting with at least one service board inside the frame-type device, and a third control port for connecting with the control network card,
the control switch chip is configured to communicate data between the user management interface and the control network card, and communicate data between the control network card and the at least one service board, and
the first control port is configured to prevent data from the at least one service board inside the frame-type device from being forwarded to the user management interface in a first state.

15. The control board according to claim 14, wherein
the first control port is configured by an access control list (ACL) to prevent data from the at least one service board from being forwarded to the user management interface.
